# EUROPEAN PATENT SPECIFICATION

(11) **EP 0 970 619 B1**
(45) Date of publication and mention of the grant of the patent: **04.06.2003**
(21) Application number: 99202154.3
(22) Date of filing: 02.07.1999
(51) Int. Cl.: A23L 1/40

(54) **soup and sauce concentrates**
Sossen- und Suppenkonzentrat
Concentrés pour sauces et soupes

(30) Priority: 09.07.1998 EP 98202329
(43) Date of publication of application: 12.01.2000
(73) Proprietor: UNILEVER N.V., 3000 DK Rotterdam (NL); UNILEVER PLC, London EC4P 4BQ (GB)
(72) Inventor: Kuil, Gijsbert, 3133 AT Vlaardingen (NL); Mulder, Johannes Frederik, 3133 AT Vlaardingen (NL)
(74) Representative: Wurfbain, Gilles L.

(56) References cited:
- EP-A- 0 426 211
- EP-A- 0 443 844
- EP-A- 0 516 107
- EP-A- 0 616 778
- WO-A-92/07475
- WO-A-96/29894
- US-A- 3 955 010
- US-A- 4 140 808

## Description

### Field of the invention

The present invention relates to ambient stable concentrates which yield, upon dilution with an aqueous liquid, a finished sauce, soup or gravy.

### Background of the invention

Many products have been developed in the past intended as a concentrated sauce or soup product, which could be turned into a soup or sauce by the user by dilution with water.

WO 92 07475, disclose a calcium fortified sauces and salad dressings having a low pH and comprising fat, starches, egg yolk, vinegar, flavouring material and salt.
US 4,140,808, US 3,955,010 disclose emulsified oil dressing products having a low pH and comprising fat, starches, egg yolk, vinegar, flavouring material and salt. None of these products is a soup base concentrate giving a finished product upon dilution.

US 5,332,585, US 4,468,551, US 4,363,824 describe a process for the preparation of dry, granular soup- or sauce concentrates.

US 3,996,993 and GB 1355907 describe soup- and sauce concentrates in the form of solid bars or blocks. US 3,652,299 describe similar compositions in the form of pellets and beads.

US 4,612,197 (or the equivalent EP 166 284) describes a sauce enhancer in tubes. The product disclosed is intended as a medium through which butter, egg, cream and other ingredients can be added to already prepared soups and sauces in order to improve consistency, flavour and appearance. The compositions disclosed have a pH of 5.6-5.8 and contain egg yolk, cream, butter fat, salt, flavourings. Some compositions contain skim milk powder, kappa-carrageenan, or modified potato starch.

EP 835614 describes a sauce aid in the form of an oil-in-water emulsion containing besides oil and water ungelatinised starch and a vegetable powder in a finely divided form. Emulsifiers are reported to be undesired in such formulations.

The products as described above are either difficult to dose because of their solid form, are not ambient stable products or products which have only ambient stability up till the moment of use or do not give a finished sauce or soup.

WO 96 29894 describes fat continuous sauce concentrates which are substantially free of unsaturated trans fatty acid residues. The products of the composition are reported to be microbially stable upon partial use if stored chilled.

### Summary of the invention

There has been a demand for concentrated base products which would be convenient in use, yield a finished sauce, soup or gravy only by dilution with water or an aqueous liquid. The composition should be such that there is no need to add other components besides water to arrive at a fully structured and finished sauce, although it should not be excluded. Also, said product should be microbially stable at room temperature, preferably even after opening the packed product. Preferably, the product should also be physically stable under ambient conditions (i.e. no substantial oil exudation or phase separation). The product should preferably be pourable or spoonable.

It has now been found that the above objectives could be fulfilled (in full or in part) by a soup- or sauce base, comprising (in percentages by weight):
a. fat or oil, in an amount of 10-70%
b. starch-based thickener, in an amount of 2-35%
c. water, in amount of 10-60%
d. egg-yolk based emulsifier, in an amount of 1-12%
e. organic acid(s), in an amount of 0.1-6%, of which at least 10% is acetic acid
f. salt, in an amount of 1-8%
g. flavouring composition, in an amount of 1-35%,
wherein the pH of the composition is below 4.5.

Preferably the pH of the above compositions is 4.0 or less. As a lower boundary a pH of at least 3.0 is preferred, more preferably at least 3.5. Lowering the pH may be effected by incorporating acids like acetic acid, lactic acid, citric acid and the like in these compositions, in an amount sufficient to obtain the desired pH.

### Detailed description of the invention

The above concentrated compositions can be turned into a sauce or soup just by diluting with water or an aqueous liquid such as e.g. wine, milk, water which is used for cooking meat or vegetables or mixtures thereof. Some stirring will generally be needed to obtain a homogeneous mixture. Heating will generally be desired to obtain the right consistency.

Finished soups and sauces generally contain the same amount of salt (about 0.5-1.5%). Hence, the amount of salt present will depend on the desired dilution factor to obtain a finished soup or sauce. For example, a concentrated base product containing 4% of salt will e.g. be diluted using one part concentrated base composition and four parts of water. In order to achieve the desired content of salt on dilution of the concentrates according to the invention these concentrates contain preferably at least 3% of salt, and preferably not more than 6%. The high content of salt will reduce the water activity Aw, thereby increasing the microbial stability at ambient conditions.

The dilution factor and the amount of starch-based thickener will then determine whether a thick, creamy soup is obtained or a thick, creamy sauce is obtained. Finished soup will require typically 0.25-2% starch, whereas a sauce typically requires 2-5% of starch, depending on the type of starch used. The amount of starch-based thickener in the concentrated base product is preferably at least 10% and at most 25% by weight.

In the concentrated soup- or sauce base according to the invention the amount of fat or oil is preferably at least 20% and at most 60% by weight. Generally speaking, the higher the amount of oil or fat present the lower the amount of water. Water is preferably present in an amount of at least 15% and at most 50% by weight.

In order to get the desired taste, consistency and homogeneity the amount of egg yolk-based emulsifier in the concentrated soup- or sauce base is preferably at least 1.5% and at most 10% by weight.

Although the base product according to the invention may be used without any flavouring substance to provide a white base sauce or soup to which the end user may add the own flavouring substances, it will generally be preferred to incorporate already in the concentrated soup- or sauce base a substance imparting flavour and/or aroma. These can be the known substances like herbs and spices, seeds, nuts flavouring oils, chopped vegetables (e.g. onions and garlic), wine etcetera. Also, to give a specific sauce or soup like e.g. mushroom-, tomato-, mustard-soup or -sauce, the (chopped) components like mushrooms, tomatoes, tomato paste, cream, mustard, cheese particles soy sauce etceterea may also be incorporated in the compositions. Generally such compounds will be added in amounts 4 and 25% by weight.

Although it is not preferred that all starch is already in its swollen state in the concentrated base product, as it would have a too thick consistency to be conveniently used, it may be preferred, depending upon the amount of oil and water used and the type of packaging used that at least part of the starch (e.g. 0.5-5% of the starch) is in its swollen state. The remainder of the starch will be swollen upon heating the concentrated base product in use, simultaneous or prior to diluting the concentrated base product.

For maximum convenience, the soup- or sauce base according to the invention is preferably in a pourable or spoonable form. This will enable the product to be packed in (glass) jars, bottles (plastic and glass), tubs, etcetera.

As both oil/fat and water are present and a homogeneous product will be desired, the product will be in the form of an emulsion. It is preferred that the composition is an oil in water emulsion (O/W).

The concentrated base products according to the invention as described above may be used to prepare a ready-to-eat finished sauce by mixing it with an aqueous liquid, in a ratio of 1 part sauce base and between 2 and 7 parts aqueous liquid. The actual ratio will depend on desired end result. Dilution may be effected using an aqueous liquid, such as water, wine, milk, cream, fruit and vegetable juices, liquid in which vegetables, meat or fish has been cooked, etcetera or any mixture thereof. Other dilution rates may be used if so desired.

Likewise, the concentrated base products according to the invention as described above may be used to prepared a ready-to-eat finished soup by mixing it with an aqueous liquid, in a ratio of 1 part soup base and between 4 and 10 parts aqueous liquid. The actual ratio will depend on the desired end result. Dilution may be effected in the way as with sauces described above. Other dilution rates may be used if so desired.

The invention is further exemplified by the following examples, which are to be understood as to be non-limiting.

### Examples

Oil in water emulsions were prepared having the following compositions (in percentages by weight):

| | **comp. A** | **comp. B** | **comp. C** |
|---|---|---|---|
| vegetable oil | 20 | 40 | 50 |
| starch | 20 | 20 | 20 |
| flavour mix | 7 | 7 | 7 |
| egg yolk (92/8) | 2 | 4 | 5 |
| vinegar | 2.7 | 1.5 | 1.0 |
| citric acid | 0.1 | 0.1 | 0.1 |
| salt | 5.0 | 5.0 | 5.0 |
| water | 43.2 | 22.4 | 11.9 |
| | 100 % | 100 % | 100 % |

In the above, the vegetable oil used was soybean oil.
The starch was modified corn starch (Colflo 67, ex National Starch)
The flavour mix was composed of vegetable flavour, sugar, whitewine flavour, garlic powder, white pepper and citric acid.
The egg yolk was pasteurised stabilised egg yolk (treated with lecithase L-10 as known in the art) and consisted of 92% egg yolk and 8% salt.

Salt was ordinary kitchen salt.

Composition A was prepared by:
- mixing all ingredients (except oil and starch), heat to 85°C, keep for 3 minutes and cool to less than 20°C.
- oil and starch were mixed to form a slurry and added under constant mixing
- the product was homogenised in a colloid mill.

Compositions B and C were prepared by
- mixing all ingredients (except oil and starch), heat to 85°C, keep for 3 minutes and cool to less than 20°C.
- addition of half of the oil under constant mixing
- homogenise in a colloid mill
- the remainder of the oil was mixed with the starch to form a slurry and added to the rest of the formulation under constant mixing.

The above compositions appeared to have a water activity of 0.96 - 0.98 and a pH of 3.7-3.8. All compositions A, B and C appeared physically and microbially stable for 2 months. Compositions B and C had paste-like consistency; composition A had a liquid consistency.

The compositions could be turned into ready to eat sauces of high quality by diluting them with water under heating and stirring for a few minutes. Applied dilution factor for all compositions: one part composition A/B/C in 4 parts water.

## Claims

1. Concentrated soup- or sauce base, comprising (in percentages by weight):
a. fat or oil, in an amount of 10-70%
b. starch-based thickener, in an amount of 10-35%
c. water, in amount of 10-60%
d. egg-yolk based emulsifier, in an amount of 1-12%
e. organic acid(s), in an amount of 0.1-6%, of which at least 10% is acetic acid
f. salt, in an amount of 1-8%
g. flavouring composition, in an amount of 1-35%,
wherein the pH of the composition is below 4.5.

2. Soup- or sauce base according to claim 1, wherein the pH is 4.0 or lower.

3. Soup- or sauce base according to claim 1, wherein wherein the acid(s) are citric acid, acetic acid, lactic acid or mixtures thereof.

4. Soup- or sauce base according to claim 1, wherein the amount of fat or oil is between 20 and 60%.

5. Soup- or sauce base according to claim 1, wherein the amount of starch-based thickener is between 10 and 25%.

6. Soup- or sauce base according to claim 1, wherein the amount of water is between 15 and 50%.

7. Soup- or sauce base according to claim 1, wherein the amount of egg yolk-based emulsifier is between 1.5 and 10%.

8. Soup- or sauce base according to claim 1, wherein the amount of salt is between 3 and 6%

9. Soup- or sauce base according to claim 1, wherein the amount of flavouring components is between 4 and 25% by weight.

10. Soup- or sauce base, according to claim 1, wherein the starch-based thickener contains 0.5-5% swollen starch.

11. Soup- or sauce base according to claim 1, wherein the egg-yolk based emulsifier comprises egg yolk modified by the an enzyme having phospholipase A2 activity.

12. Soup- or sauce base according to claim 1, wherein the composition is in a pourable or spoonable form.

13. Soup- or sauce base according to claim 1, wherein the composition is an oil in water emulsion (O/W).

14. Process for preparing a ready-to-eat sauce, wherein a soup- or sauce base according to any of claims 1-13 is mixed with an aqueous liquid, in a ratio of 1 part sauce base and between 2 and 7 parts aqueous liquid.

15. Process for preparing a ready-to-eat soup, wherein a soup- or sauce base according to any of claims 1-13 is mixed with an aqueous liquid, in a ratio of 1 part sauce base and between 4 and 10 parts aqueous liquid.

## Patentansprüche

1. Konzentrierte Suppen- oder Soßengrundlage, umfassend (in Gewichtsprozent):
a. Fett oder Öl in einer Menge von 10-70%
b. Verdickungsmittel auf Stärkebasis in einer Menge von 10-35%
c. Wasser in einer Menge von 10-60%
d. auf Eigelb basierenden Emulgator in einer Menge von 1-12%
e. Organische Säure(n) in einer Menge von 0,1-6%, wovon mindestens 10% Essigsäure ist.
f. Salz in einer Menge von 1-8%
g. Aromazusammensetzung in einer Menge von 1-35%,
wobei der pH-Wert der Zusammensetzung unter 4,5 liegt.

2. Suppen- oder Soßengrundlage nach Anspruch 1, wobei der pH-Wert 4,0 oder niedriger ist.

3. Suppen- oder Soßengrundlage nach Anspruch 1, wobei die Säure(n) Zitronensäure, Essigsäure, Milchsäure oder Gemische davon sind.

4. Suppen- oder Soßengrundlage nach Anspruch 1, wobei die Menge an Fett oder Öl zwischen 20 und 60% liegt.

5. Suppen- oder Soßengrundlage nach Anspruch 1, wobei die Menge von Verdickungsmittel auf Stärkebasis zwischen 10 und 25% liegt.

6. Suppen- oder Soßengrundlage nach Anspruch 1, wobei die Wassermenge zwischen 15 und 50% liegt.

7. Suppen- oder Soßengrundlage nach Anspruch 1, wobei die Menge an auf Eigelb basierendem Emulgator zwischen 1,5 und 10% liegt.

8. Suppen- oder Soßengrundlage nach Anspruch 1, wobei die Salzmenge zwischen 3 und 6% liegt.

9. Suppen- oder Soßengrundlage nach Anspruch 1, wobei die Menge an Aromakomponenten zwischen 4 und 25 Gewichtsprozent liegt.

10. Suppen- oder Soßengrundlage nach Anspruch 1, wobei das Verdickungsmittel auf Stärkebasis 0,5-5% gequollene Stärke enthält.

11. Suppen- oder Soßengrundlage nach Anspruch 1, wobei der auf Eigelb basierende Emulgator Eigelb umfasst, das durch ein Enzym mit Phospholipase A2-Aktivität modifiziert wurde.

12. Suppen- oder Soßengrundlage nach Anspruch 1, wobei die Zusammensetzung eine gießbare oder löffelbare Form ist.

13. Suppen- oder Soßengrundlage nach Anspruch 1, wobei die Zusammensetzung eine Öl-in-Wasser-Emulsion (O/W) ist.

14. Verfahren zum Herstellen einer essfertigen Soße, wobei eine Suppen- oder Soßengrundlage nach einem der Ansprüche 1-13 mit einer wässrigen Flüssigkeit in einem Verhältnis von 1 Teil Soßengrundlage und zwischen 2 und 7 Teilen wässriger Flüssigkeit vermischt wird.

15. Verfahren zum Herstellen einer essfertigen Suppe, wobei eine Suppen- oder Soßengrundlage nach einem der Ansprüche 1-13 mit einer wässrigen Flüssigkeit in einem Verhältnis von 1 Teil Soßengrundlage und zwischen 4 und 10 Teilen wässriger Flüssigkeit vermischt wird.

## Revendications

1. Base de soupe ou de sauce concentrée, comprenant (en pourcentages en poids) :
a. une matière grasse ou une huile, dans une quantité de 10 à 70 %,
b. un épaississant à base d'amidon, dans une quantité de 10 à 35 %
c. de l'eau, dans une quantité de 10 à 60 %
d. un émulsionnant à base de jaune d'oeuf, dans une quantité de 1 à 12 %
e. des acides organiques dans une quantité de 0,1 à 6 %, parmi lesquels au moins 10 % est de l'acide acétique.
f. du sel dans une quantité de 1 à 8 %
g. une composition de parfum dans une quantité de 1 à 35 %,
dans laquelle le pH de la composition est inférieur à 4,5.

2. Base de soupe ou de sauce selon la revendication 1, dans laquelle le pH est de 4,0 ou inférieur.

3. Base de soupe ou de sauce selon la revendication 1, dans laquelle le ou les acides sont de l'acide citrique, de l'acide acétique, de l'acide lactique ou des mélanges de ceux-ci.

4. Base de soupe ou de sauce selon la revendication 1, dans laquelle la quantité de matière grasse ou d'huile est comprise entre 20 et 60 %.

5. Base de soupe ou de sauce selon la revendication 1, dans laquelle la quantité d'épaississant à base d'amidon est comprise entre 10 et 25 %.

6. Base de soupe ou de sauce selon la revendication 1, dans laquelle la quantité d'eau est comprise entre 15 et 50 %.

7. Base de soupe ou de sauce selon la revendication 1, dans laquelle la quantité d'émulsionnant à base de jaune d'oeuf est comprise entre 1,5 et 10%.

8. Base de soupe ou de sauce selon la revendication 1, dans laquelle la quantité de sel est comprise entre 3 et 6 %.

9. Base de soupe ou de sauce selon la revendication 1, dans laquelle la quantité de composants de parfums est comprise entre 4 et 25 % en poids.

10. Base de soupe ou de sauce selon la revendication 1, dans laquelle l'épaississant à base d'amidon contient de 0,5 à 5 % d'amidon gonflé.

11. Base de soupe ou de sauce selon la revendication 1, dans laquelle l'émulsionnant à base de jaune d'oeuf comprend du jaune d'oeuf modifié par une enzyme ayant une activité de phospholipase A2.

12. Base de soupe ou de sauce selon la revendication 1, dans laquelle la composition est sous une forme pouvant être versée ou pouvant être prélevée à la cuiller.

13. Base de soupe ou de sauce selon la revendication 1, dans laquelle la composition est une émulsion huile dans l'eau.

14. Procédé de préparation d'une sauce prête à consommer, dans lequel une base de soupe ou de sauce selon l'une quelconque des revendications 1 à 13 est mélangée avec un liquide aqueux dans un rapport de 1 partie de base de sauce pour entre 2 et 7 parties de liquide aqueux.

15. Procédé de préparation d'une soupe prête à consommer, dans lequel une base de soupe ou de sauce selon l'une quelconque des revendications 1 à 13 est mélangée avec un liquide aqueux dans un rapport de 1 partie de base de sauce pour entre 4 et 10 parties de liquide aqueux.
